(19) Europäisches Patentamt
European Patent Office
Office européen des brevets

(11) **EP 4 303 063 A1**

(12) **EUROPEAN PATENT APPLICATION**
published in accordance with Art. 153(4) EPC

(43) Date of publication:
**10.01.2024 Bulletin 2024/02**

(21) Application number: **21928499.9**

(22) Date of filing: **03.03.2021**

(51) International Patent Classification (IPC):
**B60L 15/20** (2006.01)

(52) Cooperative Patent Classification (CPC):
Y02T 10/72

(86) International application number:
**PCT/CN2021/078910**

(87) International publication number:
**WO 2022/183410 (09.09.2022 Gazette 2022/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Zhejiang Geely Holding Group Co., Ltd.
Hangzhou, Zhejiang 310051 (CN)**

• **Geely Automobile Research Institute
(Ningbo) Co., Ltd
Ningbo, Zhejiang 315336 (CN)**

(72) Inventor: **YE, Xianjun
Hangzhou, Zhejiang 310051 (CN)**

(74) Representative: **Zaboliene, Reda
Metida
Business center Vertas
Gyneju str. 16
01109 Vilnius (LT)**

(54) **VEHICLE CONTROL METHOD AND SYSTEM, AND VEHICLE**

(57) A vehicle control method, comprising: obtaining an actual rotational speed and actual torque of a motor of a vehicle; calculating, on the basis of a Kalman filter rotational speed estimation model, a reference rotational speed according to the actual rotational speed and the actual torque of the motor; extracting an oscillation rotational speed according to the actual rotational speed and the reference rotational speed; determining compensation torque on the basis of the oscillation rotational speed; and implementing active damping control on the vehicle according to the compensation torque and the actual torque. Also disclosed are a control system and a vehicle. According to the vehicle control method and system, on the basis of the Kalman filter rotational speed estimation model having a parameter adaptation function, the oscillation rotational speed that can reflect a jitter characteristic of a transmission system is extracted in real time, and on the basis of the oscillation rotational speed, active damping control of the vehicle is implemented by implementing active dumping torque by a driving motor as an actuator, so that the purpose of vibration reduction is achieved.

obtaining the actual rotational speed and actual torque of the motor of the vehicle — S10

calculating the reference rotational speed according to the actual rotational speed and the actual torque of the motor, based on a Kalman filtering rotational speed estimation mode — S20

extracting the oscillation rotational speed according to the actual rotational speed and the reference rotational speed — S30

determining the compensation torque based on the oscillating rotational speed — S40

performing active damping control on the vehicle according to the compensation torque and the actual torque — S50

FIG. 2

# EP 4 303 063 A1

**Description**

**TECHNICAL FIELD**

The present invention relates to the technical field of vehicle control, and in particular, to a vehicle control method and system and a vehicle.

**BACKGROUND**

Because of the fast response of the motor torque of electric vehicles, they often change frequently and greatly in driving, and there is a change in the direction of torque. Due to the relatively simple under damping characteristics of the transmission system, it is easy to cause drivability problems caused by the jitter of the vehicle transmission system under the conditions of starting the vehicle, fast refueling, fast throttle reduction, acceleration condition transformation to energy recovery condition, exit energy recovery and so on. These jitter problems will seriously affect the performance of the vehicle, resulting in poor user experience.

**SUMMARY OF THE INVENTION**

In view of the above problems, the present invention is proposed to provide a vehicle control method, a vehicle control system, and a vehicle that overcome the above problems or at least partially solve the above problems.
An object of the present invention is to provide a vehicle control method and system for reducing vehicle jitter to improve user experience.
A further object of the present invention is to improve the active damping control effect of the electric drive transmission system.
A further purpose of the invention is to quickly identify severe conditions such as sharp fluctuations in speed and bumpy road surface caused by sudden changes in wheel adhesion coefficient during driving, so as to avoid the false triggering of active damping control.
In particular, according to an aspect of the embodiments of the present invention, a vehicle control method is provided, including:

obtaining actual rotational speed and actual torque of a motor of a vehicle;
calculating a reference rotational speed based on the actual rotational speed and the actual torque of the motor based on a Kalman filtering rotational speed estimation model;
extracting an oscillation rotational speed according to the actual rotational speed and the reference rotational speed;
determining a compensation torque based on the oscillation rotational speed;
performing active damping control on the vehicle according to the compensation torque and the actual torque.

Optionally, the step of calculating the reference rotational speed based on the actual rotational speed and the actual torque of the motor based on the Kalman filtering rotational speed estimation model includes:

establishing the Kalman filter rotational speed estimation model based on dynamics of a transmission system of the vehicle;
calculating an optimal adaptive correction coefficient of the Kalman filter rotational speed estimation model in real time;
based on the Kalman filtering rotational speed estimation model, obtaining a first rotational speed estimation value according to the optimal adaptive correction coefficient, the actual rotational speed and the actual torque, and acting the first rotational speed estimation value as the reference rotational speed.

Optionally, the step of calculating the optimal adaptive correction coefficient in the Kalman filter rotational speed estimation model in real time includes:

calculating a plurality of second rotational speed estimation values based on the Kalman filtering rotational speed estimation model according to the actual rotational speed, the actual torque and a plurality of different adaptive correction coefficient values; wherein the plurality of the adaptive correction coefficient values correspond to the plurality of the second rotational speed estimation values one by one;
calculating steady-state errors between each of the second rotational speed estimation values and the actual rotational speed, respectively;
obtaining the optimal adaptive correction coefficient according to the plurality of the adaptive correction coefficient

2

values and a corresponding plurality of the steady-state errors.

Optionally, the step of calculating the plurality of second rotational speed estimation values based on the Kalman filtering rotational speed estimation model according to the actual rotational speed, the actual torque and a plurality of different adaptive correction coefficient values, includes:

determining value range of the adaptive correction coefficient of the Kalman filtering rotation speed estimation model, according to rotation speed change curve of the vehicle accelerating and/or decelerating under different working conditions;

selecting a plurality of adaptive correction coefficient values in the value range of the adaptive correction coefficient, and forming a plurality of Kalman filtering rotational speed estimation models based on the plurality of adaptive correction coefficient values;

obtaining a plurality of second rotational speed estimation values using the plurality of Kalman filtering rotational speed estimates, according to the actual rotational speed and the actual torque of the motor.

Optionally, the step of calculating steady-state errors between each of the second rotational speed estimation values and the actual rotational speed, respectively, includes:

calculating speed differences between the second rotating speed estimation values and the actual rotating speed, and obtaining the steady-state errors by low-pass filtering the speed differences.

Optionally, the step of obtaining the optimal adaptive correction coefficient according to the plurality of the adaptive correction coefficient values and the corresponding plurality of the steady-state errors includes:

when the number of the adaptive correction coefficient values is two, performing linear interpolation on the adaptive correction coefficient values and the corresponding steady-state errors to obtain a corresponding adaptive correction coefficient value when the steady-state error is 0, and acting the corresponding adaptive correction coefficient value when the steady-state error is 0 as the optimal adaptive correction coefficient.

Optionally, the step of obtaining the optimal adaptive correction coefficient according to the plurality of the adaptive correction coefficient values and the corresponding plurality of the steady-state errors includes:

when the number of the adaptive correction coefficient values is greater than or equal to three, performing multivariate function fitting on a plurality of the adaptive correction coefficient values and a plurality of the corresponding steady-state errors to obtain a fitting curve equation ;

according to the fitting curve equation, calculating a corresponding adaptive correction coefficient value when the steady-state error is 0, and acting the corresponding adaptive correction coefficient value when the steady-state error is 0 as the optimal adaptive correction coefficient.

Optionally, the step of extracting the oscillating rotational speed according to the actual rotational speed and the reference rotational speed includes:

calculating the speed difference between the actual rotational speed and the reference rotational speed, and performing high-pass filtering on the speed difference to obtain the oscillating rotational speed.

Optionally, before determining the compensation torque based on the oscillating rotational speed, the vehicle control method further includes:

performing phase lead correction on the oscillating rotational speed to obtain a phase-corrected oscillating rotational speed.

Optionally, after obtaining the actual rotational speed and actual torque of the vehicle, the vehicle control method also includes:

obtaining current operating condition of the vehicle according to current state data of the vehicle;

determining a gain factor for active damping control according to the current operating conditions of the vehicle; and the step of determining the compensation torque based on the oscillating rotational speed includes:

determining the compensation torque according to the gain factor and the oscillating rotational speed.

Optionally, the current state data of the vehicle includes at least one of the following:

the actual rotational speed of the motor, the actual torque of the motor, current gear of the vehicle, current vehicle speed, engine state and/or a torque request information .

Optionally, after extracting the oscillating rotational speed according to the actual rotational speed and the reference rotational speed, the vehicle control method also including:

monitoring the oscillating rotational speed and the steady-state errors;

judging whether the oscillation rotational speed and the steady-state errors meet an active damping control discontinuing condition ;
if so, discontinuing the active damping control of the vehicle.

Optionally, the active damping control discontinuing condition includes:

the maximum absolute value of the plurality of steady-state errors calculated in the process of calculating the optimal adaptive correction coefficient of the Kalman filter rotational speed estimation model in real time is greater than a preset rotational speed value, and the duration of the maximum absolute value greater than the preset rotational speed value is greater than a preset time; or
after the active damping control is applied to the vehicle, degree of attenuation of the amplitude of the oscillating rotational speed within a specified number of cycles is less than a preset threshold.

In particular, the present invention also provides a vehicle control system, including a memory and a processor, wherein the memory stores a control program, and the control program is used to implement the above-mentioned vehicle control method when executed by the processor.

In particular, the present invention also provides a vehicle including the above-mentioned vehicle control system.

The vehicle control method and system of the invention design a Kalman filter speed estimation model with parameter adaptive function based on the vehicle dynamics, to obtain the reference rotational speed, so as to extract the oscillation rotational speed that can reflect the jitter characteristics of the transmission system in real time. Based on the oscillation rotational speed, the driving motor is used as the actuator to implement the active damping torque to realize the active damping control of the vehicle, so as to achieve the purpose of vibration reduction. In addition, the invention is not sensitive to changes in the stiffness, damping, backlash size and other parameters of the vehicle transmission system. After determining the parameters used in the Kalman filter speed estimation model (specifically, the adaptive correction coefficient), the invention can adapt to different vehicles.

Due to the complex and diverse real-time operating environment of vehicles, the parameters of the speed estimation model are uncertain. Therefore, based on the Kalman filter speed estimation model, the invention establishes multiple speed estimation models by selecting multiple adaptive correction coefficient data within the variation range of its adaptive correction coefficient, and performs state estimation of the multiple speed estimation models in parallel. The numerical relationship between the values of multiple adaptive correction coefficients and the model estimation errors (i.e., the steady-state errors between the estimated values of the multiple speed estimation models and the actual rotational speed) is obtained, and the optimal adaptive correction coefficients are determined. The more the value of the adaptive correction coefficient is selected, the closer the optimal adaptive correction coefficient is to the real condition, and thus the more accurate the reference speed is obtained.

The invention performs high-pass filtering on the speed difference between the reference rotational speed and the actual rotational speed, avoids the possible influence of steady-state error in the speed difference, and makes the extracted oscillation rotational speed reflect the vibration amplitude and phase in real time when torsional vibration or shock vibration occurs in the transmission system.

By monitoring the oscillating rotational speed and the steady-state error, the present invention can monitor whether the rotational speed estimated by the parameter adaptive Kalman filter rotational speed estimation module based on vehicle dynamics is reasonable on the one hand, and on the other hand, the rationality of the extracted oscillation rotational speed can be judged by the influence of active damping control on the speed. In this way, severe working conditions such as sharp fluctuations in speed and bumpy road caused by sudden changes in wheel attachment coefficient can be quickly identified, so as to avoid the false triggering of active damping control.

The above description is only an overview of the technical solutions of the present invention, in order to be able to understand the technical means of the present invention more clearly, it can be implemented according to the content of the description, and in order to make the above and other purposes, features and advantages of the present invention more obvious and easy to understand , the following specific embodiments of the present invention are given.

The above and other objects, advantages and features of the present invention will be more apparent to those skilled in the art from the following detailed description of the specific embodiments of the present invention in conjunction with the accompanying drawings.

**BRIEF DESCRIPTION OF THE DRAWINGS**

Hereinafter, some specific embodiments of the present invention will be described in detail by way of example and not limitation with reference to the accompanying drawings. The same reference numbers in the figures designate the same or similar parts or parts. It will be understood by those skilled in the art that the drawings are not necessarily to scale. In the attached picture:

FIG. 1 is a schematic structural flowchart of a vehicle control method according to an embodiment of the present invention;

FIG. 2 is a schematic flowchart of a vehicle control method according to an embodiment of the present invention;

FIG. 3 is a flow chart of calculating reference rotational speed according to the actual rotational speed and actual torque of the motor, based on a Kalman filtering rotational speed estimation model of an vehicle control method according to an embodiment of the the present invention;

FIG. 4 is a schematic flow chart of calculating the optimal adaptive correction coefficient in the Kalman filter rotational speed estimation model in real time according to a vehicle control method according to an embodiment of the present invention;

FIG. 5 is a schematic flowchart of calculating a plurality of second rotational speed estimation values based on a Kalman filter rotational speed estimation model of a vehicle control method according to an embodiment of the present invention;

FIG. 6 is an overall schematic block diagram of obtaining a first speed estimation value based on a Kalman filter speed estimation model of a vehicle control method according to an embodiment of the present invention;

FIG. 7 is a schematic flowchart of a vehicle control method according to another embodiment of the present invention; FIG. 8 is a graph showing the variation of the actual rotational speed and the estimated reference rotational speed with time of the motor according to an embodiment of the present invention; FIG. 9 is a graph showing the variation of the actual torque of the motor with time according to an embodiment of the present invention;

FIG. 10 is a graph of the extracted oscillation rotational speed over time according to an embodiment of the present invention;

FIG. 11 is a graph showing the variation of the actual rotational speed and the estimated reference rotational speed of the motor with time when the time is 103-112s according to an embodiment of the present invention;

FIG. 12 is a graph showing the variation of the actual torque of the motor with time when the time is 103-112s according to an embodiment of the present invention;

FIG. 13 is a graph of the extracted oscillation rotational speed over time when the time is 103-112s according to an embodiment of the present invention;

FIG. 14 is a schematic block diagram of a vehicle control system according to one embodiment of the present invention.

## DETAILED DESCRIPTION OF PREFERRED EMBODIMENTS

Exemplary embodiments of the present disclosure will be described in more detail below with reference to the accompanying drawings. While exemplary embodiments of the present disclosure are shown in the drawings, it should be understood that the present disclosure may be embodied in various forms and should not be limited by the embodiments set forth herein. Rather, these embodiments are provided so that the present disclosure will be more thoroughly understood, and will fully convey the scope of the present disclosure to those skilled in the art.

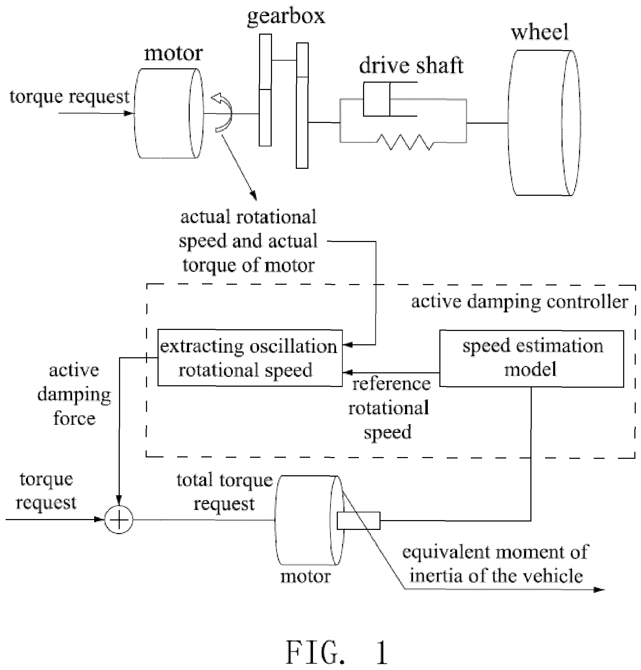

FIG. 1 is a schematic structural flowchart of a vehicle control method according to an embodiment of the present invention.

As shown in FIG.1, when the vehicle is running, based on the torque request, the motor rotates, and the wheels are driven to rotate through the transmission and the drive shaft. During this process, the actual rotational speed and actual torque of the motor can be detected in real time. This actual rotational speed and actual torque are input into the active damping controller. In the active damping controller, the reference rotational speed is obtained through the speed estimation model, and then the oscillation rotational speed is extracted based on the reference rotational speed and the actual rotational speed, and the active damping force, that is, the compensation torque, is obtained according to the oscillation rotational speed. Active damping control of the vehicle is performed by controlling the rotation of the vehicle motor according to the compensation torque and real-time torque.

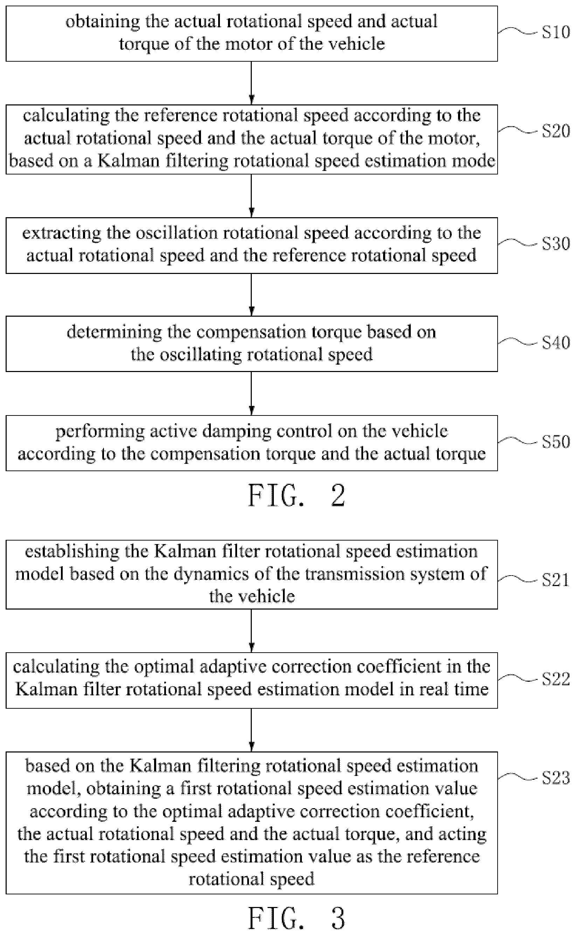

FIG. 2 is a flowchart of a vehicle control method according to a specific embodiment of the present invention. Specifically, the step of obtaining the compensation torque by the active damper forms the vehicle control method of this embodiment. As shown in Figure 2, the vehicle control method may include:

S10, obtaining the actual rotational speed and actual torque of the motor of the vehicle;

S20, calculating the reference rotational speed according to the actual rotational speed and the actual torque of the motor, based on a Kalman filtering rotational speed estimation model;

S30, extracting the oscillation rotational speed according to the actual rotational speed and the reference rotational speed;

S40, determining the compensation torque based on the oscillating rotational speed;

S50, performing active damping control on the vehicle according to the compensation torque and the actual torque.

Specifically, the active damping control strategy is implemented in the real-time control of the vehicle in this embodiment, the purpose of which is to simulate the damping effect of the transmission system on the torque of the power source, and dynamically compensate the damping of the transmission system. In order to calculate the damping force that the transmission system needs to compensate in real time, the core is to obtain the oscillation rotational speed of the transmission system in real time. Oscillation rotational speed refers to the part of the speed oscillation when the actual rotational speed of the motor oscillates periodically, and its amplitude and phase reflect the vibration of the drive train when it shakes.

The vehicle control method of this embodiment is based on vehicle dynamics, the Kalman filter rotational speed estimation model with parameter adaptive function is designed, the reference rotational speed is obtained, and an oscillating rotational speed that can reflect the jitter characteristics of the transmission system is extracted in real time. As an actuator, the drive motor implements active damping torque base on the oscillating rotational speed to achieve active damping control of the vehicle, thereby achieving the purpose of vibration reduction. In addition, the present application is not sensitive to changes in parameters such as stiffness, damping, and backlash size of the vehicle transmission system, and after determining the parameters used in the Kalman filter speed estimation model (specifically, the adaptive correction coefficient), the invention can adapt to different vehicles.

Specifically, referring to FIG. 3, step S20 calculating the reference rotational speed according to the actual rotational speed and the actual torque of the motor, based on the Kalman filtering rotational speed estimation model of the embodiment, includes:

S21, establishing the Kalman filter rotational speed estimation model based on the dynamics of the transmission system of the vehicle;

S22, calculating the optimal adaptive correction coefficient in the Kalman filter rotational speed estimation model in real time;

S23, based on the Kalman filtering rotational speed estimation model, obtaining a first rotational speed estimation value according to the optimal adaptive correction coefficient, the actual rotational speed and the actual torque, and acting the first rotational speed estimation value as the reference rotational speed.

Specifically, in this embodiment, the Kalman filter rotational speed estimation model is a rotational speed estimation model of the motor rotor shaft established based on vehicle dynamics. When establishing the Kalman filter speed estimation model, it is first necessary to determine the equivalent moment of inertia at the motor rotor shaft during vehicle motion. Specifically, the calculation method used to determine the equivalent moment of inertia at the motor rotor shaft is:

based on the same work done per unit time by the force acting on the motor rotor shaft as at the wheel, we can get:

$$J_w \frac{dw_w}{dt} w_w = J_{eq} \frac{dw_r}{dt} w_r \; \text{--------} \qquad (1)$$

in formula (1), $J_w$ is the moment of inertia of the whole vehicle at the wheel, and the moment of inertia $J_w$ can be determined as $M*R^2$, where M is the mass of the vehicle; R is the rolling radius of the tire; $w_w$ is the angular velocity of the wheel; $w_r$ is the angular velocity of the motor rotor shaft.

During the driving process of the whole vehicle, when the gear of the vehicle is in gear, there is the following formula:

$$w_r = w_w * tr \text{----------} (2)$$

In formula (2), tr is the transmission ratio of the whole vehicle transmission system (the product of the transmission speed ratio and the reducer speed ratio).

The motor rotor shaft when the whole vehicle is in motion (gear is in gear) is selected as the analysis object, and it can be obtained from equations (1) and (2):

$$J_{eq} = \frac{M * R^2}{tr^2} \text{-------} (3) ;$$

Its equation of motion is:

$$Tq_{actual} = J_{eq} * \frac{dw_r}{dt} \text{-----} (4)$$

That is, the rotor shaft speed of the motor is:

$$w_r = w_{r0} + \int_{t0}^{t} \frac{Tq_{actual}}{J_{eq}} \text{-----} (5)$$

In formula (5), $w_{r0}$ is the angular velocity at time t0.
In the real-time discrete control system, there are the following formulas:

$$w_r(k) = w_r(k-1) + \frac{Tq_{actual}(k)}{J_{eq}} * Ts \text{------} (6)$$

In formula (6): $J_{eq}$ is the equivalent moment of inertia equivalent to the motor rotor shaft when the vehicle is moving; M is the vehicle mass; R is the tire rolling radius; $Tq_{actual}(k)$ is the actual torque at the current moment acting on the motor rotor shaft (including the sum of the motor output torque and the braking torque of the motor rotor shaft which is applied by the friction braking force of the braking system at the wheel end during vehicle braking); $w_r$ is the motor rotor shaft speed collected by the resolver position sensor; $w_r(k)$ is the motor rotor shaft rotational speed at the current moment; $w_r(k-1)$ is the motor rotor shaft rotational speed at the previous moment; Ts is the sampling time, which is usually selected as 1 millisecond in the real-time control system.
The above equivalent moment of inertia is an estimation model of the rotor shaft speed of the motor obtained based on an ideal vehicle dynamics model. In practical engineering applications, due to the influence of factors such as vehicle weight and real-time changes in vehicle load during operation (such as wind speed, road gradient, etc.), the rotational speed estimation model is actually a complex nonlinear system. Therefore, the correction coefficient of the rotational speed estimation model established in practice needs to be adaptive.
As a specific embodiment, in this embodiment, the correction coefficient of the established Kalman filter rotational speed estimation model needs to be adapted. In this embodiment, the calculation of the reference rotational speed adopts the Kalman filter rotational speed estimation model. In the Kalman filter rotational speed estimation model, the correction coefficient can be adjusted adaptively. Specifically, in the adaptive Kalman filter rotational speed estimation model, the motor rotor shaft rotational speed collected in real time by the motor resolver (position/speed sensor) is taken as the observation quantity, and the observation quantity is used to correct the state quantity in the state equation. That is, the deviation between the actually measured motor speed and the estimated speed of the Kalman filter speed estimation model is used as the feedback input of the speed estimation model.
The discretized expression of the process estimation and measurement equation of the Kalman filter based on equation (6) is:

$$\begin{cases} x[n+1] = A * x[n] + B * u[n] + w[n] \\ y[n] = C * x[n] + v[n] \end{cases} \text{------} (7)$$

In formula (7):

$$B = \frac{Ts}{Jeq}$$

A=1; $\frac{Ts}{Jeq}$ ; $u[n]Tq_{actual}[n]$; C = 1; w[n] and v[n] are process noise and measurement noise respectively (in real-time control systems, in order to reduce the amount of computation, it can be set to zero).

The Kalman filter speed estimation model based on vehicle dynamics uses the following formula to estimate the speed of the speed observation system:

$$\hat{x}[k + 1] = A * \hat{x}[k] + B * Tq_{actual}[k] + L_c * (y[k] - C * \hat{x}[k]) \quad --- （8）$$

In formula (8): y[k] is the measured value of the motor rotor speed at the current moment; $\hat{x}[k]$ is the estimated value of the current motor rotor speed estimated at the previous moment; $Tq_{actual}[k]$ is the actual output value of the motor torque at the current moment; $\hat{x}[k + 1]$ is the estimated value of the motor rotor speed at the next moment estimated at the current moment, that is, the optimal estimated value of the rotational speed, is used as the output of the designed rotational speed estimation model.

In the formula, Lc is the adaptive correction coefficient of the Kalman filter speed estimation model, and the value of this value determines the rationality of the Kalman filter speed estimation model. Therefore, this parameter should be able to be adjusted adaptively.

Based on the above analysis, due to the complexity and diversity of the real-time operating environment of vehicles, the parameters of the speed estimation model are uncertain. Therefore, based on the Kalman filter speed estimation model, the invention establishes multiple Kalman filter speed estimation models by selecting multiple adaptive correction coefficient values within the variation range of the adaptive correction coefficient of the Kalman filter speed estimation model, and the state estimation of multiple Kalman filter speed estimation models is carried out in parallel, to obtain the numerical relationship between multiple adaptive correction coefficients and model estimation errors (that is, the steady-state error between the estimated speed and the actual speed of the multiple speed estimation models), so as to determine the optimal adaptive correction coefficients.

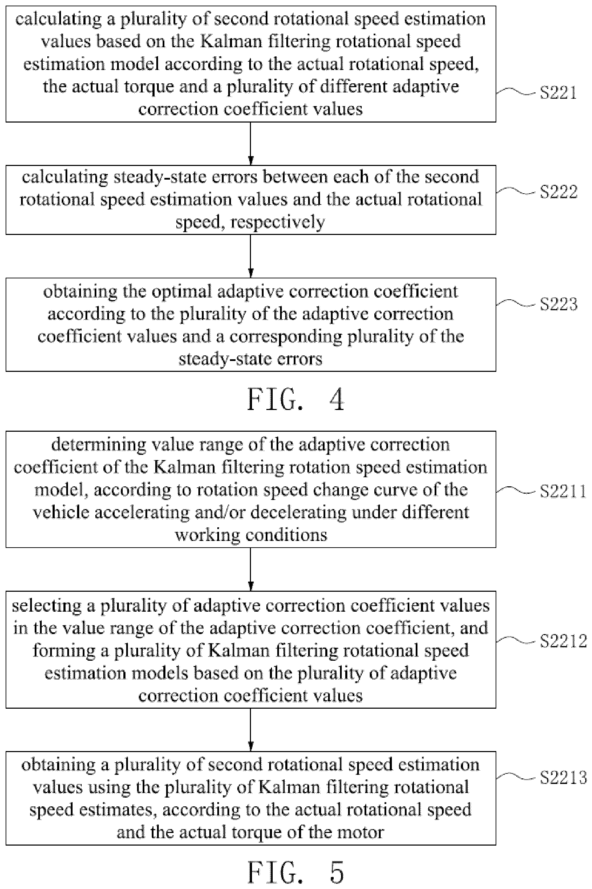

As an embodiment, referring to FIG. 4 , in this embodiment, the step S22 calculating the optimal adaptive correction coefficient in the Kalman filter rotational speed estimation model in real time in includes:

> S221, calculating a plurality of second rotational speed estimation values based on the Kalman filtering rotational speed estimation model according to the actual rotational speed, the actual torque and a plurality of different adaptive correction coefficient values.
> S222, calculating steady-state errors between each of the second rotational speed estimation values and the actual rotational speed, respectively;
> S223: obtaining the optimal adaptive correction coefficient according to the plurality of the adaptive correction coefficient values and a corresponding plurality of the steady-state errors.

In this embodiment, each adaptive correction coefficient value can be calculated to obtain one second estimated rotational speed value, and a plurality of adaptive correction coefficient values and a plurality of second estimated rotational speed values are in one-to-one correspondence. Therefore, when the steady-state error is subsequently calculated by using the second rotational speed estimated value and the actual rotational speed, the steady-state error, the second rotational speed estimated value and the adaptive correction coefficient value are also in one-to-one correspondence.

In this embodiment, the plurality of Kalman filter rotational speed estimation models are established, and then a plurality of adaptive correction coefficients are obtained through the plurality of Kalman filter rotational speed estimation models, and then the optimal adaptive correction coefficient is obtained from the plurality of adaptive correction coefficients, the more values of the adaptive correction coefficient, the closer the obtained optimal adaptive correction coefficient is to the actual working condition, and the more accurate the obtained reference rotational speed.

Specifically, referring to FIG. 5 , in step S221, calculating a plurality of second rotational speed estimation values based on the Kalman filtering rotational speed estimation model according to the actual rotational speed, the actual torque and a plurality of different adaptive correction coefficient values includes:

> S2211, determining value range of the adaptive correction coefficient of the Kalman filtering rotation speed estimation model, according to rotation speed change curve of the vehicle accelerating and/or decelerating under different working conditions;

S2212, selecting a plurality of adaptive correction coefficient values in the value range of the adaptive correction coefficient, and forming a plurality of Kalman filtering rotational speed estimation models based on the plurality of adaptive correction coefficient values;

S2213, obtaining a plurality of second rotational speed estimation values using the plurality of Kalman filtering rotational speed estimates, according to the actual rotational speed and the actual torque of the motor.

The estimated value of the second rotational speed obtained in this way can be closer to the actual value, thereby ensuring the accuracy of the entire active damping control.

As an embodiment of the present invention, the specific steps of calculating the steady-state errors between each of the second rotational speed estimation values and the actual rotational speed, respectively in step S222 include: calculating speed differences between the second rotating speed estimation values and the actual rotating speed, and obtaining the steady-state errors by low-pass filtering the speed differences.

Low-pass fitting is a filtering method. The rule is that low-frequency signals can pass normally, while high-frequency signals that exceed the set threshold are blocked and weakened. However, the magnitude of blocking and attenuation will vary according to different frequencies and different filtering procedures (purposes). In this embodiment, the low-pass filtering of the speed difference is mainly to eliminate abnormal data in the speed difference.

As an embodiment of the present invention, in step S223 in this embodiment, the step of obtaining an optimal adaptive correction coefficient according to multiple adaptive correction coefficient values and multiple corresponding steady-state errors includes:

when the number of the adaptive correction coefficient values is two, performing linear interpolation on the adaptive correction coefficient values and the corresponding steady-state errors to obtain a corresponding adaptive correction coefficient value when the steady-state error is 0, and acting the corresponding adaptive correction coefficient value when the steady-state error is 0 as the optimal adaptive correction coefficient.

As another embodiment, the step S223 in this embodiment, obtaining the optimal adaptive correction coefficient according to the plurality of the adaptive correction coefficient values and the corresponding plurality of the steady-state errors includes:

when the number of the adaptive correction coefficient values is greater than or equal to three, performing multivariate function fitting on a plurality of the adaptive correction coefficient values and a plurality of the corresponding steady-state errors to obtain a fitting curve equation;

according to the fitting curve equation, calculating a corresponding adaptive correction coefficient value when the steady-state error is 0, and acting the corresponding adaptive correction coefficient value when the steady-state error is 0 as the optimal adaptive correction coefficient.

The number of adaptive correction coefficients determines that the final selected adaptive correction coefficient is closer to the optimal adaptive correction coefficient. However, when there are only two adaptive correction coefficients calculated, it is difficult to obtain the optimal adaptive correction coefficient from the limited adaptive correction coefficients due to the limited number of the adaptive correction coefficients, and the error is large, so it is should to interpolate between two adaptive correction coefficients. In order to obtain a more accurate optimal adaptive correction coefficient, as many interpolations as possible can be performed, and the optimal adaptive correction coefficient finally obtained by this interpolation method is closer to reality. When there are many values of the adaptive correction coefficient, the optimal adaptive correction coefficient with higher accuracy can be obtained directly through multivariate function fitting.

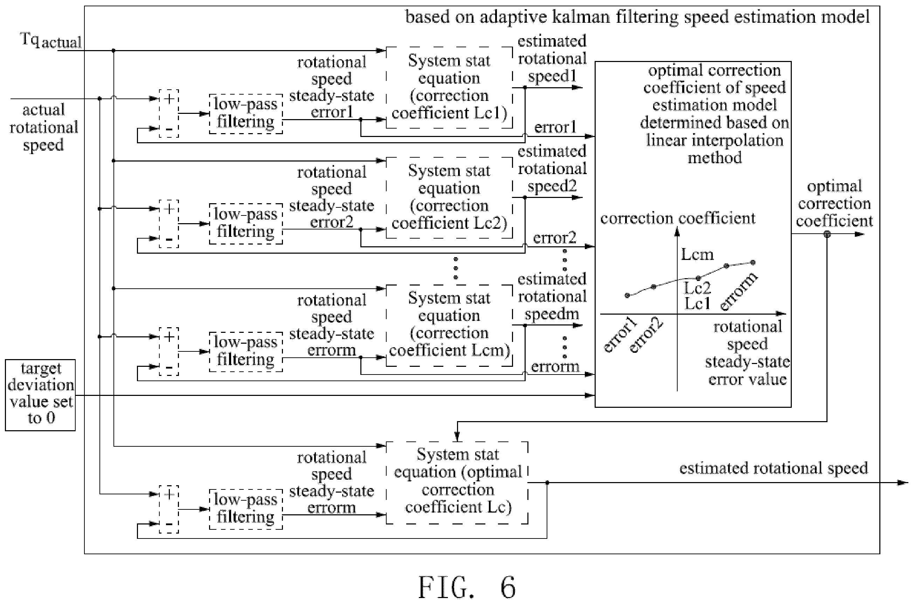

In a specific embodiment, referring to FIG. 6 , based on the Kalman filter rotational speed estimation model, the specific process of calculating the reference rotational speed according to the actual rotational speed and the actual torque of the motor is as follows:

Step 1: selecting the curb weight of the matched model as the parameter M used in the Kalman filter rotational speed estimation model; determine the transmission ratio tr in each gear; thus determine the $J_{eq}$ in each gear.

Step 2: determining the value range of the adaptive correction coefficient Lc of the Kalman filter rotational speed estimation model.

According to the speed change curve of acceleration/deceleration of the vehicle under different actual working conditions, the value range of the adaptive correction coefficient Lc is determined, such as [0.005, 0.3].

Step 3: within the value range of the adaptive correction coefficient Lc, selecting m points, namely [Lc1, Lc2, ..., Lcm], and form m Kalman filter speed estimation models based on the m numbers of Lcs. The steady-state error between the estimated rotational speed (ie, the second rotational speed estimated value) of each Kalman filter rotational speed estimation model and the actual rotational speed are obtained in real time, to form an array of steady-state errors [error1, error2, ..., errorm]. Corresponding to the steady-state error array is an array [Lc1, Lc2, ..., Lcm] of the adaptive correction coefficient Lc of the Kalman filter rotational speed estimation model.

Step 4: determining the optimal adaptive correction coefficient Lc.

According to the steady-state error array [error1, error2, ..., errorm] and the corresponding adaptive correction coefficient array [Lc1, Lc2, ..., Lcm], based on interpolation method (specifically linear interpolation) or multivariate function fitting method, the Lc value under the condition that the steady-state error between the estimated rotational speed of the rotational speed estimation model and the actual rotational speed is zero is determined as the optimal adaptive correction coefficient.

Step 5: calculating the first speed estimate value in real time as a reference rotational speed, based on the optimal adaptive correction coefficient determined in real time,.

As a specific embodiment of the present invention, in step S30, the step of extracting the oscillating rotational speed according to the actual rotational speed and the reference rotational speed includes:

calculating the speed difference between the actual rotational speed and the reference rotational speed, and performing high-pass filtering on the speed difference to obtain the oscillation rotational speed.

In this embodiment, the reason for performing high-pass filtering on the speed difference between the reference rotational speed and the actual rotational speed is to avoid the influence of the steady-state error that may exist in the speed difference, so that the extracted oscillation rotational speed can reflect the vibration amplitude and phase in real time when torsional vibration or shock vibration occurs in the transmission system.

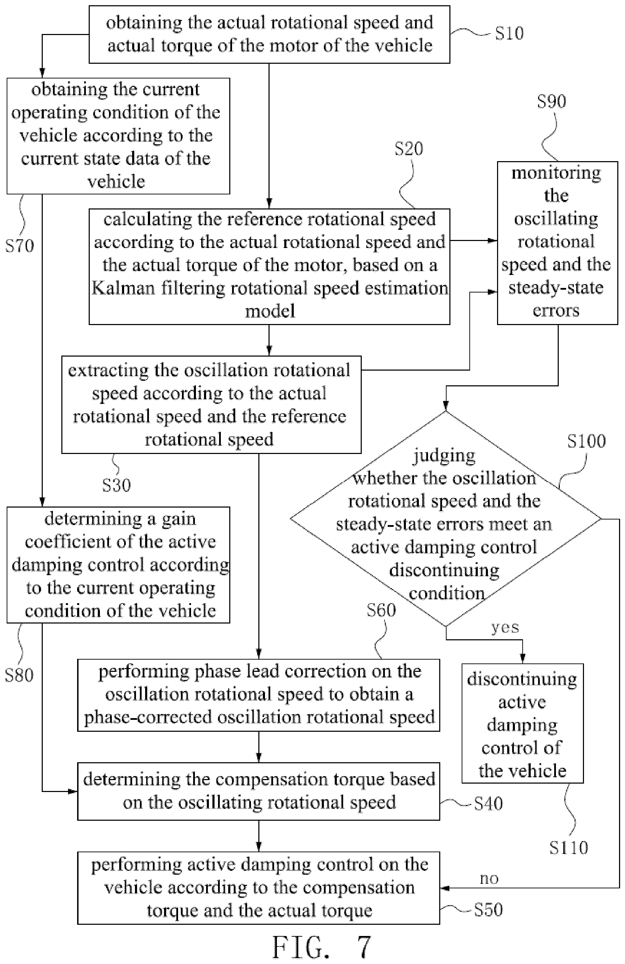

As a specific embodiment of the present invention, referring to FIG. 7 , before step S40, determines the compensation torque based on the oscillating rotational speed, the embodiment further includes:

S60, performing phase lead correction on the oscillation rotational speed to obtain a phase-corrected oscillation rotational speed.

In this embodiment, the purpose of performing phase lead correction on the extracted oscillation rotational speed is to add phase lead to the control system, so as to improve the active damping control effect of the electric drive transmission system in the closed-loop control.

As a specific embodiment of the present invention, as shown in FIG. 7, after the step S10, obtaining the actual rotational speed and actual torque of the motor, it further includes:

S70, obtaining the current operating condition of the vehicle according to the current state data of the vehicle;

S80, determining a gain coefficient of the active damping control according to the current operating condition of the vehicle. And, in this case, the step S40 specifically includes:

determining the compensation torque according to the gain factor and the oscillating rotational speed.

Specifically, in step S70, the current state data of the vehicle includes at least one of the following:

the actual rotational speed of the motor, the actual torque of the motor, current gear of the vehicle, current vehicle speed, engine state and/or a torque request information.

In this embodiment, the judgment on the operating conditions of the whole vehicle is mainly based on the torque request value of the electric drive system and the rotational speed of the motor rotor to determine whether the vehicle is in a torque zero-crossing state (the torque request value of the vehicle is from positive to negative, or from negative to positive, at this time, the transmission tooth surface of the engine changes, and when the transmission tooth surface changes, there may be an impact), or the torque is rapidly increased, or the torque is rapidly decreased.

In step S80, due to the fast response of the motor torque of the electric vehicle, the torque of the motor often changes frequently and has a large value during driving, and the direction of the torque also changes. The responsiveness of the transmission system is relatively simple, which results in the under-damped characteristic of the transmission system. When the vehicle starts, accelerates the accelerator quickly, decelerates the accelerator quickly, transitions from the acceleration condition to the energy recovery condition, and exits the energy recovery condition, it is easy to cause the vehicle transmission system to shake and cause drivability problems. The solution to jitter is usually by compensating the output torque. In the way of compensating torque, the amount of compensating torque is based on the extracted vibration component reflecting the vibration of the transmission system, that is, the amount of rotational speed fluctuation. The compensation torque is obtained by multiplying the rotational speed fluctuation by a coefficient. This coefficient is the gain coefficient. For different working conditions, the selected gain coefficients are different, therefore, it is necessary to obtain the corresponding gain coefficients according to the working conditions. In the actual process, the gain coefficient obtained by working conditions is generally obtained by calibration according to the actual vehicle.

As a specific embodiment of the present invention, referring to FIG. 7 , after extracting the oscillating rotational speed, it further includes:

S90, monitoring the oscillating rotational speed and the steady-state errors.

The steady-state errors here are the steady-state errors between the plurality of second estimated rotational speed values and the actual rotational speed calculated in the process of calculating the optimal adaptive correction coefficient in the Kalman filter rotational speed estimation model in real time in step S20.

S100, judging whether the oscillation rotational speed and the steady-state errors meet an active damping control discontinuing condition. If yes, it means that the active damping control can be stopped at this time, and then step S120 is executed.

S110, discontinuing active damping control of the vehicle.

In one embodiment, the active damping control discontinuing condition may include the maximum absolute value (ie the maximum absolute value of the multiple steady-state errors) calculated in the process of calculating the optimal adaptive correction coefficient in the Kalman filter rotational speed estimation model in real time is greater than the preset rotational speed value, and the duration for which the maximum absolute value is greater than the preset rotational speed value is greater than the preset time. The judgment of this condition is to judge whether the vehicle of the vehicle is slipping. If the condition is met, the wheel is slipping. If the wheel is slipping, the active damping control is suspended to avoid false triggering of the active damping control.

In another embodiment, the active damping control discontinuing condition may include that after the active damping control is applied to the vehicle, degree of attenuation of the amplitude of the oscillating rotational speed within a specified number of cycles is less than a preset threshold. For this discontinuing condition, if the amplitude attenuation degree within the specified number of cycles is greater than or equal to the preset threshold, it means that the active damping control is valid; otherwise, it means that the active damping control is invalid. If the active damping control is valid, continue the active damping control; if the active damping control is invalid, exit in time to ensure the effectiveness of the active damping control.

Since the main goal of active damping control is to suppress/eliminate the vibration of the transmission system, the frequency range of its rotational speed vibration/oscillation is mainly 5Hz to 20Hz. However, in some cases, the vehicle shakes and other situations are inevitable. Therefore, when the vehicle meets some conditions, the active damping control of the vehicle is suspended to avoid triggering the active damping control under any circumstances and affecting the normal driving of the vehicle.

The monitoring of the oscillation rotational speed and the steady-state error in this embodiment is mainly to monitor the wheel slippage caused by the sudden change of the wheel adhesion coefficient of the vehicle during driving, and the vehicle driven on a bumpy road and other harsh working conditions. The method of monitoring of oscillation rotational speed and steady-state error of this embodiment is used, can quickly identify whether the wheel is slipping, or whether the vehicle is driving in harsh conditions, or whether the vehicle's active damping control is invalid, so as to avoid false triggering of the active damping control.

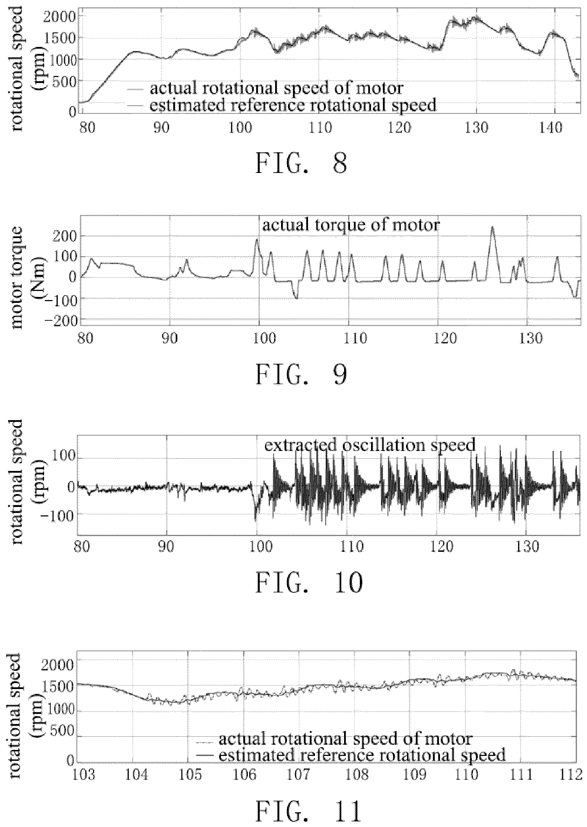

As shown in FIG. 8-10 and FIG. 11-13, in this embodiment, an electric vehicle is taken as an example. Under the condition that the accelerator and brake are stepped on alternately at low speed, the Kalman filter speed estimation model based on the correction coefficient of vehicle dynamics in this embodiment is adopted to obtain the ideal reference speed. The extracted oscillation speed can also well reflect the amplitude and phase of the transmission system jitter.

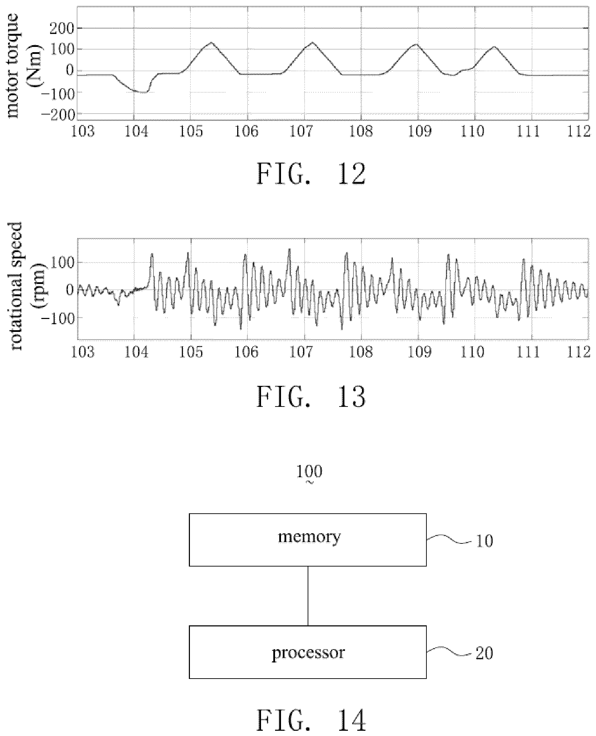

FIG. 14 is a schematic block diagram of a vehicle control system according to a specific embodiment of the present invention. As a specific embodiment of the present invention, the present invention also provides a vehicle control system 100 , the control system 100 may include a memory 10 and a processor 20 , the memory 10 stores a control program, and the control program is executed by the processor 20 for use in for realizing the above-mentioned vehicle control method. The processor 20 may be a central processing unit (central processing unit, CPU for short), or a digital processing unit or the like. The processor 20 transmits and receives data through the communication interface. The memory 10 is used to store programs executed by the processor 20. The memory 20 is any medium that can be used to carry or store the desired program code in the form of instructions or data structures and that can be accessed by a computer, and may also be a combination of multiple memories. The aforementioned computing programs can be downloaded from a computer-readable storage medium to a corresponding computing/processing device or downloaded to a computer or external storage device via a network (eg, the Internet, a local area network, a wide area network, and/or a wireless network).

In the vehicle control system of this embodiment, based on vehicle dynamics, the Kalman filter rotational speed estimation model with parameter adaptive function is designed, a reference rotational speed is obtained, and an oscillating rotational speed that can reflect the jitter characteristics of the transmission system is extracted in real time. Based on the oscillation rotational speed, the driving motor is used as the actuator to implement the active damping torque to realize the active damping control of the vehicle, so as to achieve the purpose of vibration reduction. In addition, this application is not sensitive to the change of parameters such as stiffness, damping and backlash size of the vehicle transmission system. After determining the correction coefficient used, it can adapt to different vehicles and avoid the phase lag problem caused by filtering algorithms such as band-pass filter. At the same time, it can quickly identify the bad working conditions such as sharp fluctuation of speed and bumpy road caused by sudden change of wheel adhesion coefficient in driving, so as to avoid the false triggering of active damping control.

As a specific embodiment of the present invention, the present invention also provides a vehicle, which may include the above-mentioned vehicle control system.

By now, those skilled in the art will recognize that, although exemplary embodiments of the present invention have been illustrated and described in detail herein, it is still possible to directly follow the present disclosure without departing from the spirit and scope of the present invention. Numerous other variations or modifications can be identified or derived consistent with the principles of the present invention. Accordingly, the scope of the present invention should be understood and deemed to cover all such other variations or modifications.

**Claims**

1. A vehicle control method, comprising:

   obtaining actual rotational speed and actual torque of a motor of a vehicle;
   calculating a reference rotational speed according to the actual rotational speed and the actual torque of the motor, based on a Kalman filtering rotational speed estimation model;
   extracting an oscillation rotational speed according to the actual rotational speed and the reference rotational speed;
   determining a compensation torque based on the oscillation rotational speed;
   performing active damping control on the vehicle according to the compensation torque and the actual torque.

2. The vehicle control method according to claim **1**, wherein,
   the step of calculating the reference rotational speed according to the actual rotational speed and the actual torque of the motor based on the Kalman filtering rotational speed estimation model comprises:

   establishing the Kalman filter rotational speed estimation model based on dynamics of a transmission system of the vehicle;
   calculating an optimal adaptive correction coefficient of the Kalman filter rotational speed estimation model in real time;
   based on the Kalman filtering rotational speed estimation model, obtaining a first rotational speed estimation value according to the optimal adaptive correction coefficient, the actual rotational speed and the actual torque, and acting the first rotational speed estimation value as the reference rotational speed.

3. The vehicle control method according to claim **2**, wherein,
   the step of calculating the optimal adaptive correction coefficient in the Kalman filter rotational speed estimation model in real time comprises:

   calculating a plurality of second rotational speed estimation values based on the Kalman filtering rotational speed estimation model according to the actual rotational speed, the actual torque and a plurality of different adaptive correction coefficient values; wherein the plurality of the adaptive correction coefficient values correspond to the plurality of the second rotational speed estimation values one by one;
   calculating steady-state errors between each of the second rotational speed estimation values and the actual rotational speed, respectively;
   obtaining the optimal adaptive correction coefficient according to the plurality of the adaptive correction coefficient values and a corresponding plurality of the steady-state errors.

4. The vehicle control method according to claim **3**, wherein,
   the step of calculating the plurality of second rotational speed estimation values based on the Kalman filtering rotational speed estimation model according to the actual rotational speed, the actual torque and a plurality of different adaptive correction coefficient values, comprises:

   determining value range of the adaptive correction coefficient of the Kalman filtering rotation speed estimation model, according to rotation speed change curve of the vehicle accelerating and/or decelerating under different working conditions;
   selecting a plurality of adaptive correction coefficient values in the value range of the adaptive correction coefficient, and forming a plurality of Kalman filtering rotational speed estimation models based on the plurality of adaptive correction coefficient values;
   obtaining a plurality of second rotational speed estimation values using the plurality of Kalman filtering rotational speed estimates, according to the actual rotational speed and the actual torque of the motor.

**5.** The vehicle control method according to claim **3**, wherein,
the step of calculating steady-state errors between each of the second rotational speed estimation values and the actual rotational speed, respectively, comprises:
calculating speed differences between the second rotating speed estimation values and the actual rotating speed, and obtaining the steady-state errors by low-pass filtering the speed differences.

**6.** The vehicle control method according to claim **3**, wherein,
the step of obtaining the optimal adaptive correction coefficient according to the plurality of the adaptive correction coefficient values and the corresponding plurality of the steady-state errors comprises:
when the number of the adaptive correction coefficient values is two, performing linear interpolation on the adaptive correction coefficient values and the corresponding steady-state errors to obtain a corresponding adaptive correction coefficient value when the steady-state error is 0, and acting the corresponding adaptive correction coefficient value when the steady-state error is 0 as the optimal adaptive correction coefficient.

**7.** The vehicle control method according to claim **3**, wherein,
the step of obtaining the optimal adaptive correction coefficient according to the plurality of the adaptive correction coefficient values and the corresponding plurality of the steady-state errors comprises:

when the number of the adaptive correction coefficient values is greater than or equal to three, performing multivariate function fitting on a plurality of the adaptive correction coefficient values and a plurality of the corresponding steady-state errors to obtain a fitting curve equation;
according to the fitting curve equation, calculating a corresponding adaptive correction coefficient value when the steady-state error is 0, and acting the corresponding adaptive correction coefficient value when the steady-state error is 0 as the optimal adaptive correction coefficient.

**8.** The vehicle control method according to claim **1**, wherein,
the step of extracting the oscillating rotational speed according to the actual rotational speed and the reference rotational speed comprises:
calculating the speed difference between the actual rotational speed and the reference rotational speed, and performing high-pass filtering on the speed difference to obtain the oscillating rotational speed.

**9.** The vehicle control method according to claim **1**, wherein,
before determining the compensation torque based on the oscillating rotational speed, the vehicle control method further comprises:
performing phase lead correction on the oscillating rotational speed to obtain a phase-corrected oscillating rotational speed.

**10.** The vehicle control method according to claim **1**, wherein,
after obtaining the actual rotational speed and actual torque of the vehicle, the vehicle control method also comprises:

obtaining current operating condition of the vehicle according to current state data of the vehicle;
determining a gain factor for active damping control according to the current operating conditions of the vehicle; and
the step of determining the compensation torque based on the oscillating rotational speed comprises:
determining the compensation torque according to the gain factor and the oscillating rotational speed.

**11.** The vehicle control method according to claim **10**, wherein,
the current state data of the vehicle comprises at least one of the following:
the actual rotational speed of the motor, the actual torque of the motor, current gear of the vehicle, current vehicle speed, engine state and/or a torque request information.

**12.** The vehicle control method according to claim **3**, wherein,
after extracting the oscillating rotational speed, the vehicle control method also comprising:

monitoring the oscillating rotational speed and the steady-state errors;
judging whether the oscillation rotational speed and the steady-state errors meet an active damping control discontinuing condition;
if so, discontinuing the active damping control of the vehicle.

13. The vehicle control method according to claim **12**, wherein,
    the active damping control discontinuing condition comprises:

    the maximum absolute value of the plurality of steady-state errors calculated in the process of calculating the optimal adaptive correction coefficient of the Kalman filter rotational speed estimation model in real time is greater than a preset rotational speed value, and the duration of the maximum absolute value greater than the preset rotational speed value is greater than a preset time; or
    after the active damping control is applied to the vehicle, degree of attenuation of the amplitude of the oscillating rotational speed within a specified number of cycles is less than a preset threshold.

14. A vehicle control system, comprising a memory and a processor, wherein a control program is stored in the memory, and the control program is configured to implement the vehicle control according to any one of claims **1-13** when the control program is executed by the processor method.

15. A vehicle, **characterized by** comprising the vehicle control system of claim **14.**

FIG. 1

obtaining the actual rotational speed and actual torque of the motor of the vehicle —— S10

calculating the reference rotational speed according to the actual rotational speed and the actual torque of the motor, based on a Kalman filtering rotational speed estimation mode —— S20

extracting the oscillation rotational speed according to the actual rotational speed and the reference rotational speed —— S30

determining the compensation torque based on the oscillating rotational speed —— S40

performing active damping control on the vehicle according to the compensation torque and the actual torque —— S50

FIG. 2

establishing the Kalman filter rotational speed estimation model based on the dynamics of the transmission system of the vehicle —— S21

calculating the optimal adaptive correction coefficient in the Kalman filter rotational speed estimation model in real time —— S22

based on the Kalman filtering rotational speed estimation model, obtaining a first rotational speed estimation value according to the optimal adaptive correction coefficient, the actual rotational speed and the actual torque, and acting the first rotational speed estimation value as the reference rotational speed —— S23

FIG. 3

calculating a plurality of second rotational speed estimation values based on the Kalman filtering rotational speed estimation model according to the actual rotational speed, the actual torque and a plurality of different adaptive correction coefficient values ~ S221

calculating steady-state errors between each of the second rotational speed estimation values and the actual rotational speed, respectively ~ S222

obtaining the optimal adaptive correction coefficient according to the plurality of the adaptive correction coefficient values and a corresponding plurality of the steady-state errors ~ S223

FIG. 4

determining value range of the adaptive correction coefficient of the Kalman filtering rotation speed estimation model, according to rotation speed change curve of the vehicle accelerating and/or decelerating under different working conditions ~ S2211

selecting a plurality of adaptive correction coefficient values in the value range of the adaptive correction coefficient, and forming a plurality of Kalman filtering rotational speed estimation models based on the plurality of adaptive correction coefficient values ~ S2212

obtaining a plurality of second rotational speed estimation values using the plurality of Kalman filtering rotational speed estimates, according to the actual rotational speed and the actual torque of the motor ~ S2213

FIG. 5

FIG. 6

EP 4 303 063 A1

obtaining the actual rotational speed and actual torque of the motor of the vehicle — S10

obtaining the current operating condition of the vehicle according to the current state data of the vehicle — S70

calculating the reference rotational speed according to the actual rotational speed and the actual torque of the motor, based on a Kalman filtering rotational speed estimation model — S20

monitoring the oscillating rotational speed and the steady-state errors — S90

extracting the oscillation rotational speed according to the actual rotational speed and the reference rotational speed — S30

judging whether the oscillation rotational speed and the steady-state errors meet an active damping control discontinuing condition — S100

determining a gain coefficient of the active damping control according to the current operating condition of the vehicle — S80

performing phase lead correction on the oscillation rotational speed to obtain a phase-corrected oscillation rotational speed — S60

yes

discontinuing active damping control of the vehicle — S110

determining the compensation torque based on the oscillating rotational speed — S40

no

performing active damping control on the vehicle according to the compensation torque and the actual torque — S50

FIG. 7

# EP 4 303 063 A1

FIG. 8

FIG. 9

FIG. 10

FIG. 11

FIG. 12

FIG. 13

FIG. 14

## INTERNATIONAL SEARCH REPORT

| International application No. |
|---|
| **PCT/CN2021/078910** |

| **A.** | **CLASSIFICATION OF SUBJECT MATTER** |
|---|---|

B60L 15/20(2006.01)i

According to International Patent Classification (IPC) or to both national classification and IPC

| **B.** | **FIELDS SEARCHED** |
|---|---|

Minimum documentation searched (classification system followed by classification symbols)

B60L

Documentation searched other than minimum documentation to the extent that such documents are included in the fields searched

Electronic data base consulted during the international search (name of data base and, where practicable, search terms used)

CNABS, CNTXT, VEN, CNKI: 转速, 扭矩, 滤波, 卡尔曼, 振荡转速, 补偿扭矩, 主动阻尼; speed, torque, filter+, kalman, EKF, oscillating, compensat+, active damping

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 105946623 A (BEIJING ELECTRIC VEHICLE CO., LTD.) 21 September 2016 (2016-09-21) <br> description, specific embodiments and figures | 1, 8, 9, 14, 15 |
| A | CN 111251900 A (ZHEJIANG LEAPMOTOR TECHNOLOGY CO., LTD.) 09 June 2020 (2020-06-09) <br> entire document | 1-15 |
| A | CN 111267636 A (ZHEJIANG LEAPMOTOR TECHNOLOGY CO., LTD.) 12 June 2020 (2020-06-12) <br> entire document | 1-15 |
| A | US 2004158425 A1 (ALSTOM LEVALLOIS PERRET) 12 August 2004 (2004-08-12) <br> entire document | 1-15 |
| A | US 2016059735 A1 (BAE SYSTEM CONTROLS INC.) 03 March 2016 (2016-03-03) <br> entire document | 1-15 |
| A | EP 2336001 A2 (ZF LENKSYSTEME GMBH) 22 June 2011 (2011-06-22) <br> entire document | 1-15 |

[✓] Further documents are listed in the continuation of Box C.　　　[✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2021** | **25 November 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/078910** |

**C.      DOCUMENTS CONSIDERED TO BE RELEVANT**

| Category* | Citation of document, with indication, where appropriate, of the relevant passages | Relevant to claim No. |
| --- | --- | --- |
| A | EP 1369281 A1 (PEUGEOT CITROEN AUTOMOBILES S.A.) 10 December 2003 (2003-12-10) <br> entire document | 1-15 |

Form PCT/ISA/210 (second sheet) (January 2015)

**INTERNATIONAL SEARCH REPORT**
Information on patent family members

International application No.

**PCT/CN2021/078910**

| Patent document cited in search report | | | Publication date (day/month/year) | Patent family member(s) | | | Publication date (day/month/year) |
|---|---|---|---|---|---|---|---|
| CN | 105946623 | A | 21 September 2016 | None | | | |
| CN | 111251900 | A | 09 June 2020 | CN | 111251900 | B | 27 April 2021 |
| CN | 111267636 | A | 12 June 2020 | None | | | |
| US | 2004158425 | A1 | 12 August 2004 | DE | 60209894 | D1 | 11 May 2006 |
| | | | | EP | 1399790 | B1 | 15 March 2006 |
| | | | | PT | 1399790 | T | 31 July 2006 |
| | | | | AT | 320622 | T | 15 April 2006 |
| | | | | PT | 1399790 | E | 31 July 2006 |
| | | | | JP | 2005508598 | A | 31 March 2005 |
| | | | | FR | 2825485 | B1 | 18 February 2005 |
| | | | | US | 6856111 | B2 | 15 February 2005 |
| | | | | DK | 1399790 | T3 | 17 July 2006 |
| | | | | WO | 02097546 | A1 | 05 December 2002 |
| | | | | DE | 60209894 | T2 | 09 November 2006 |
| | | | | CN | 1518686 | A | 04 August 2004 |
| | | | | EP | 1399790 | A1 | 24 March 2004 |
| | | | | CN | 100399220 | C | 02 July 2008 |
| | | | | JP | 4015615 | B2 | 28 November 2007 |
| | | | | FR | 2825485 | A1 | 06 December 2002 |
| | | | | ES | 2256474 | T3 | 16 July 2006 |
| US | 2016059735 | A1 | 03 March 2016 | MX | 2016011163 | A | 27 April 2017 |
| | | | | CA | 2940779 | A1 | 03 September 2015 |
| | | | | EP | 3110657 | A1 | 04 January 2017 |
| | | | | WO | 2015130901 | A1 | 03 September 2015 |
| | | | | EP | 3110657 | A4 | 21 February 2018 |
| | | | | US | 9950639 | B2 | 24 April 2018 |
| | | | | CN | 106458054 | B | 22 November 2019 |
| | | | | EP | 3110657 | B1 | 07 April 2021 |
| | | | | CA | 2940779 | C | 26 June 2018 |
| | | | | CN | 106458054 | A | 22 February 2017 |
| | | | | MX | 356088 | B | 14 May 2018 |
| EP | 2336001 | A2 | 22 June 2011 | EP | 2336001 | A3 | 07 December 2011 |
| | | | | DE | 102009047586 | A1 | 09 June 2011 |
| | | | | EP | 2336001 | B1 | 05 November 2014 |
| EP | 1369281 | A1 | 10 December 2003 | FR | 2840655 | A1 | 12 December 2003 |
| | | | | FR | 2840655 | B1 | 24 November 2006 |

Form PCT/ISA/210 (patent family annex) (January 2015)